# EUROPEAN PATENT SPECIFICATION

(11) **EP 2 028 255 B1**
(45) Date of publication and mention of the grant of the patent: **12.06.2019**
(21) Application number: 08252587.4
(22) Date of filing: 30.07.2008
(51) Int. Cl.: C01B 21/082, B82Y 30/00, H01F 1/34, C10M 125/00, C10M 125/08, C10M 125/20

(54) **Process for obtaining an inter-metallic compound and use thereof in lubricating oils**
Verfahren zum Erhalt einer zwischenmetallischen Verbindung und Verwendung davon in Schmierölen
Procédé pour obtenir un composé intermétallique et son utilisation dans des huiles lubrifiantes

(30) Priority: 02.08.2007 BR PI0703141
(43) Date of publication of application: 25.02.2009
(73) Proprietor: Petróleo Brasileiro S.A. Petrobras, CEP-20035-900 Rio de Janeiro (BR)
(72) Inventor: Menezes, Aldeci de Oliveira, Piratininga Niterói RJ, CEP: 24.350-300 (BR); Angioletto, Elídio, SC, CEP: 88.801-510 (BR)
(74) Representative: J A Kemp

(56) References cited:
- EP-A- 1 535 987
- EP-A- 1 930 399
- EP-A2- 1 548 760
- WO-A-02/066374
- GB-A- 1 135 812
- GB-A- 1 499 711
- US-A1- 2004 089 564
- W. HUANG ET AL: "Study on the synthesis of ?-Fe3N-based magnetic fluid" JOURNAL OF MAGNETISM AND MAGNETIC MATERIALS, vol. 307, no. 2, May 2006 (2006-05), pages 198-204, XP002509730 Beijing, China Retrieved from the Internet: URL:doi:10.1016/j.jmmm.2006.03.067> [retrieved on 2009-01-09]
- DATABASE WPI Week 198018 Thomson Scientific, London, GB; AN 1980-32069C XP002509731 & JP 55 040843 A (NIPPON SPINDLE MFG CO LTD) 22 March 1980 (1980-03-22)
- "The Reduction of Ferric Oxide to Iron", , 1 January 1944 (1944-01-01), XP055207784, Retrieved from the Internet: URL:http://pubs.acs.org/doi/pdf/10.1021/ed 021p46 [retrieved on 2015-08-13]

## Description

### Background of the invention

The present invention relates to a process for obtaining an intermetallic compound having magnetic properties, utilised in the formulation of a finished lubricant and contributing to reduction in friction between metal surfaces of diverse dynamic systems. More particularly the compound of the present invention is formed by substantially-spherical nanoparticles having an extremely-active contact surface capable of forming a lubricating film on surfaces in contact in dynamic systems.

### Related art

Lubricating oils are fluid substances basically obtained by means of crude oil distillation. Lubricating oils may be classified as base lubricating oils or finished lubricating oils.

Base lubricating oils may be of animal or vegetable origin, fatty oils group; derivatives of crude oil, mineral oils group; or be laboratory-produced, synthetic oils group.

Mineral oils possess a chemical composition basically comprising paraffinic and naphthenic hydrocarbons. In some oils it is even possible to find traces of aromatic hydrocarbons, however traces of olefinic hydrocarbons are rarely found. Synthetic oils may also be composed of a mixture of two or more organic compounds such as, for example, polyalphaolefins, polyglycols, esters, silicones, among others, characterising the group of compound synthetic oils.

Finished lubricating oils comprise products formulated commencing from base lubricating oils. The characteristic factor of a finished lubricant is the addition of a group of substances to the base lubricant permitting improvement of the quality of such base lubricating oil. Said substances are the so-called additives and may be solid or liquid.

The function of lubricating oil is to reduce friction and wear of metal surfaces of equipment, and assist in cooling by heat exchange to protect dynamic systems against corrosion arising from oxidative processes.

When lubricating oil is applied to a metal surface a very thin layer is formed, usually called a film. Said film is responsible for protecting moving surfaces of dynamic systems, acting in reducing friction and wear of said surfaces. The efficacy of protection is a factor dependant on the lubrication regime employed.

According to the lubrication regime employed a reactive film may be formed, formation whereof being due to action of the additives. Such reactive film formed improves even further the efficacy of the lubricant; there is an increase in resistance to wear and in reduction of friction occasioned by contact between moving metal surfaces of a dynamic system.

To obtain the finished lubricant solid additives may be added directly to the base lubricant. The best-known solid additives are: graphite, molybdenum disulphide (MoS₂) and polytetrafluoroethylene (TEFLON), whilst mica and talc may also be utilised as solid additives. These additives improve frictional efficacy between metal surfaces, particularly in situations of high load and impact.

Graphite is usually utilised being an excellent lubricant due to its superlubrication effect. Said fact demonstrates that through the use of graphite as lubricant the frictional force of the material on which the graphite is applied practically disappears at a given moment.

Graphite consists of carbon atoms disposed in superimposed layers forming an undulating crystalline structure. The lubricant action of graphite occurs due to sliding of the basal planes comprising the crystalline structure thereof.

However efficacy of the sliding process may be compromised due to resistance occasioned by coincidence of peaks of one layer with valleys of the adjacent layer occasioning perfect locking together of such superimposed layers, rendering the sliding thereof impossible.

One manner of preventing resistance to the layers sliding is should two layers and be rotated one in relation to the other, in this manner there will be occasions wherein peaks of one layer touch the peaks of another layer. This fact prevents the two layers locking together such that sliding resistance practically disappears.

The disadvantage of the use of graphite as lubricant stems from the greatest benefit from graphite occurring in humid atmospheres, which condition is not expected in the case of mediums with lubricating oils.

Molybdenum disulphide possesses characteristics appropriate for use in areas of extreme aggression such as, for example, deep water, military and aeronautical materials, chemical, petrochemical and petroleum-producing industries. This additive has a crystalline structure formed of extensive flat layers of molybdenum atoms disposed between layers of sulphur. Interactions between sulphur-sulphur planes are weak, leading to said layers sliding easily over one another.

Molybdenum disulphide has good surface adherence due to the dry film formed thereon, excellent resistance to washout by water, excellent protection against corrosion, high resistance to continuous and intermittent extreme loads, and extended durability, permitting a longer working life for dynamic systems. These characteristics render this type of additive an excellent lubricant, principally at high temperatures.

However the negative aspects of the use of molybdenum disulphide consist in the fact that commercially this additive has been quoted at high prices, it has a high density, in addition it being a substance which it is difficult to stabilise in liquid mediums.

Polytetrafluoroethylene, a product manufactured by the company DuPont and marketed under the brand TEFLON, is a material also usually utilised as an additive, the low shear force thereof giving rise to its lubricating activity. Its utilisation is limited due to the high cost of application thereof, in addition to the fact of solely being capable of utilisation within a specific band of temperature and load values, which fact limits its use.

Finished lubricating oils together with additives added to a base lubricating oil for better performance thereof are topics extensively discussed in the literature.

United States patent document US 2006094605 describes a process of obtaining a compound of molybdenum with sulphur and use of said compound as an additive for lubricants to reduce the coefficient of friction. In the process described in document US 2006094605 nanoparticles of thiomolybdenum are produced by reacting acid salts in the presence of two modifying substances. Said process comprises homogenised heat treatment of the polar solvent of the mixture of molybdenum salt and one of such modifying substances. The mixture produced is cooled and then the second modifying substance is added.

Another technology relating to lubricants is described in patent document WO 0127226. It describes a base lubricating oil for metals comprising 0.1 to 5% by weight of ferromagnetic or ferrimagnetic particles to subsequently be used having a volume weighted average crystallisation size ranging from 2 to 80 nm. The size of the nanoparticles formed determines a reduced contact surface area, limiting the efficacy of such lubricating oil.

Also comprising the state of the art, United States patent document US 2005124504 describes a lubricant composition comprising a nanomaterial and a dispersant of surfactant agent to promote stabilisation of the nanomaterial. The nanomaterial utilised in the lubricant composition described in said United States document is graphite. Graphite has high thermal conductivity, exceeding 80 W/m. Said lubricant composition is a fluid having unique properties, high heat conductivity, high viscosity index and small particles in suspension.

The principal sectors of application of lubricating oil or lubricant compositions are the automotive, industrial, maritime and railway sectors.

Consequently there is still not to be found described in the literature a finished lubricating oil composition having an additive providing efficient physicochemical properties making possible the high performance of such lubricating oil composition in the efficient reduction of friction and wear of metal surfaces of dynamic systems when in movement.

EP-A-1 930 399, which was published after the filing date of the present application, describes a magnetic intermetallic compound comprising nanometric pulverised particles of magnetised iron nitride and iron carbon-nitride, to be added to a basic lubricating oil.

Journal of Magnetism and Magnetic Materials 307(2) 2006 pps 198-204 describes synthesis of stable high-saturation magnetization ε-Fe₃N magnetic fluid by reaction of Fe(CO)₅ and NH₃.

WO 02/066374 describes thermal reactions performed at rapid transient temperatures, and a furnace able to perform such reactions.

GB 1 499 711 relates to methods for nitriding a ferrous metal article comprising subjecting the article to a nitriding atmosphere and a nitro-carburising atmosphere.

JP 55 040843 is concerned with a process in which a carburised steel ring is subjected to continuous mild gas nitriding and gas carburising.

GB 1 135 812 describes a process for production of iron nitride from iron oxide "porous lumps", for use in producing nitrogen-enriched steel.

### Summary of the invention

The present invention comprises a process of obtaining an intermetallic compound having magnetic properties. Said intermetallic compound is an additive for addition to a base lubricating oil, conferring high performance on said oil. The efficacy of the additive consists in the reduction of friction between metal surfaces and reduction of wear of diverse types of dynamic system prolonging the working life thereof. More particularly the intermetallic compound produced by the present invention is formed of pulverised nanometric substantially-spherical particles having a high contact surface area, consequently being very active. The greater contact surface area of the substances forming part of the lubricant confers on said lubricant the capacity to accelerate the process of formation of a lubricant film. The lubricant formulated with this type of additive compound is capable of forming a thin layer, that is to say an adherent film, when applied to a metal surface, conferring thereon protection against friction and against wear.

Specifically, the present invention provides a process for obtaining an intermetallic compound for reduction of friction on metal surfaces comprising producing an additive comprising pulverised nanometric substantially-spherical particles of iron nitrides and carbonitrides, having hexagonal crystalline structure, for addition to a base lubricating oil, which process comprises a first stage consisting of a reduction reaction of iron oxide in the presence of hydrogen and a second stage consisting of a nitridation/carbonitridation reaction, wherein the particles obtained possess a diameter of up to 500 nm.

### Brief description of the figures

Figure 1 shows a schematic drawing of the contact between the four spheres during the sliding test.
Figure 2 shows graphs of load against rotation obtained during the execution of the load cycles.
Figure 3 shows the result of the tribological wear test on the lubricating oils tested.

### Detailed description of the invention

The present invention relates to a process of obtaining an intermetallic compound having magnetic properties. Said compound acts as a solid additive and may be added to a base lubricating oil, creating a finished lubricating oil. Such intermetallic compound is capable of conferring high performance on the finished lubricating oil.

The physicochemical properties of such intermetallic compound endow on the finished lubricant efficient performance in the reduction of friction between metal surfaces and in the reduction of wear in diverse types of dynamic systems prolonging the working life of equipments constituting said systems.

The intermetallic compound herein disclosed contains within the molecular structure thereof species of the iron nitride and carbonitride type. The crystalline structure thereof is hexagonal, similar to the crystalline structure of graphite and of MoS₂. Said compound is produced in pulverised form and the particles thereof are substantially spherical and nanometric.

From among the crystalline phases constituting nitrides and carbonitrides, phase ε is the crystalline phase which most contributes towards reduction of friction and of wear of metal surfaces of dynamic systems. A further characteristic related to said phase ε, conferring efficacy on nitrides and carbonitrides, is the excellent corrosion resistance which this phase presents.

The efficacy of the intermetallic compound obtained by the process of the present invention is also related with the magnetic properties of said compound. The intrinsic ferromagnetic property of the intermetallic compound endows on the lubricating oil the capacity to form a thin adherent film when applied on a metal surface, conferring on said surface protection against frictional movements caused by contact between metals.

The process of obtaining the intermetallic compound of the present invention comprises a first stage, consisting of a reduction reaction, followed by a second stage, consisting of a nitridation/carbonitridation reaction of iron oxide, wherein the phenomenon of nucleation and formation of crystals of iron nitride and carbonitrides will occur.

The iron oxide reduction reaction is realised in the presence of hydrogen, at high temperatures in a rotating-chamber reactor. During realisation of the reaction the temperature of the reaction system lies at approximately 800°C, at a reference rate of 30°C/min, preferentially the reaction temperature lies within a band from 300 - 800°C. The period of realisation of the reaction may subsist for up to approximately 10 hours, preferentially the reaction is realised within a range of 5 - 10 hours.

Use of a rotating-chamber reactor for such reduction reaction promotes a high yield in terms of obtaining the product, this not being the case when carrying out said reaction in static-bed reactors.

Following completion of the iron oxide reduction stage, the reaction system is subjected to the second stage of the process consisting in the nitridation/carbonitridation reaction, providing the system with nitrogen and carbon and the consequent formation of the crystals.

Nitrogen and carbon are supplied to the reaction system through the addition of ammonia (NH₃) and methane (CH₄) to the reactor. This stage occurs at temperatures of approximately 800°C, preferentially in a band from 300 - 800°C with a period of realisation which subsist for up to approximately 10 hours, preferentially the reaction is realised in a band of 1 to 6 hours.

Following the period of realisation of the nitridation/carbonitridation reaction the reaction system must be cooled; cooling of the reaction system takes place to below a preferential temperature of approximately 25°C. The gas flow must be maintained during the cooling process to prevent oxidative degradation of the product, i.e. of the intermetallic compound.

Having obtained said intermetallic compound formed of iron nitrides and carbonitrides it is subjected to characterisation by an appropriate characterisation technique. In the present embodiment the characterisation technique utilised was scanning electronic microscopy showing that the intermetallic compound obtained is formed of substantially-spherical pulverised nanometric particles having a diameter of up to 500 nm.

Following the obtaining and characterisation of such intermetallic compound, said compound was added to a base lubricating oil to then realise the tribological friction and wear evaluation test, the same showing the efficacy of the additive herein proposed.

The procedure of obtaining a finished lubricating oil containing the intermetallic product comprises the addition of said intermetallic compound to a solution composed of a base oil and a mixture of preferentially polymeric dispersants such as, for example, sulphonated dispersants or succimide dispersants. The dispersant acts on the mixture to prevent precipitation of said intermetallic compound or separation of the oil.

Following addition of said intermetallic compound to said solution the mixture is subjected to homogenisation by a process of mechanical stirring in suitable equipment such as, for example, a Turrax-type mixer. With this type of stirring the particles experience strong collision. Such collision will promote controlled cavitation such that the size of the particles is reduced and they are dispersed and better distributed in solution. Stirring occurs within a preferential rotational band from 5000 to 25 000 rpm for a period preferentially lying within a band from 5 to 30 minutes. In this manner diverse formulations of the finished lubricating oil were obtained.

Following obtaining such finished lubricating oil formulations, said formulations were initially analysed in respect of the frictional energy thereof and, in accordance with such initial results, one of said formulations was selected for realisation of the tribological test to evaluate the effect of addition of such compound produced to a base lubricating oil.

Such tribological test comprised submitting said selected formulation to wear conditions by a suitable technique such as, for example, the sliding technique. Other types of lubricating oil were also submitted to the same test conditions. The lubricating oils utilised in said tribological test were: a base oil, the formulation of finished lubricating oil obtained by the present invention, a commercial finished lubricating oil and a mixture of a commercial lubricating oil with the metallic compound obtained in the present invention.

The sliding technique realised in such tribological test comprises application of the diverse types of lubricating oils to suitable equipment such as, for example, equipment having four spheres operating under specific conditions developed during a load cycle.

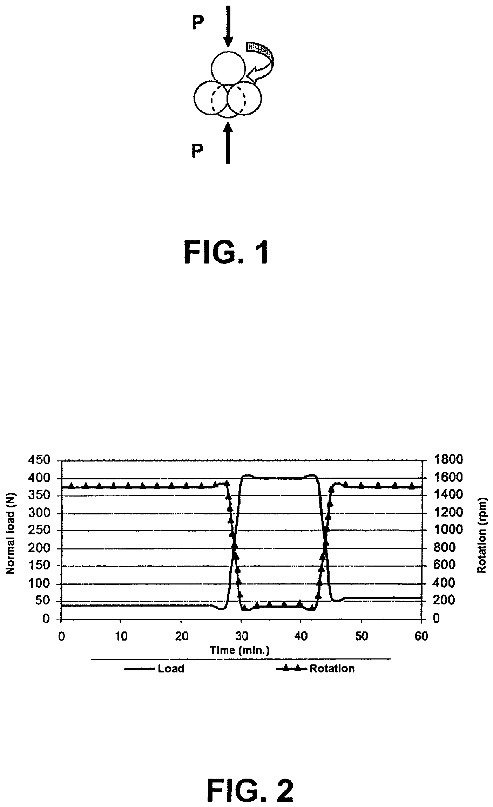

Figure 1 shows the contact configuration for such spheres, that is to say the test specimens, disposed in equipment having four spheres.

The equipment having four spheres operates with the three lower spheres affixed to a suitable device which also serves as a reservoir for the lubricating oil under evaluation. Said device may be, for example, a device of the sample-holder type.

The fourth sphere is located in an upper position connected to a chuck disposed on a drive shaft which realises a rotational movement in a band from 150 to 1500 rpm, according to the phases realised during the load cycle.

Said load cycle applied during the tribological test consists of three phases which, combined with the rotational movement of such driven shaft, cause wear of the spheres, in this manner permitting evaluation of the performance of the finished lubricating oil obtained in the present invention under different forms of lubrication.

The temperature of the load cycle is controlled such that the formulation does not experience changes in regard to its degree of viscosity. Temperature control maintains the operation of the load cycle at approximately 90°C. The period of each load cycle realised in the sliding test is of approximately 60 minutes.

During realisation of each load cycle electronic files are generated by the data acquisition system of the equipment, permitting monitoring of frictional torque and quantification of frictional energy to which such spheres are subjected.

On completion of such load cycle the lower spheres are evaluated. Said evaluation consists of an average value obtained from the values of measurement of wear on such three spheres. Said average value is the final result of the tribological test of the different types of lubricating oil tested.

For the purpose of the present invention being better understood, the invention will be particularised hereinafter in the form of examples. However such examples herein described are of a purely illustrative nature and are not limitative of the invention.

### Example 1: Obtaining the intermetallic compound.

In a reactor provided with a rotating chamber there was added approximately 100 g of iron oxide in the form of powder in a hydrogen atmosphere. The average size of the particles of iron oxide added to such reactor ranged from 1 to 15 µm. The reaction was processed at a preferential temperature of approximately 700°C for a preferential period of 7 hours.

Following completion of the period of realisation of the reduction reaction, the reaction system was subjected to nitridation/carbonitridation reaction by the addition of a flow comprising NH₃ plus up to 20% by volume of CH₄.

Following addition of NH₃ and CH₄, said nitridation/carbonitridation reaction was processed at a preferential temperature of approximately 570°C for a preferential period of approximately 5 hours.

Following completion of the period of realisation of the nitridation/carbonitridation reaction, the reaction system was gradually cooled until the temperature reached room temperature. The procedure of cooling the reaction system occurred under an inert atmosphere to prevent reoxidation of the iron. Crystals of iron nitrides and carbonitrides comprise the solid additive, that is to say the intermetallic compound object of the present invention.

Having obtained said intermetallic compound formed of iron nitrides and carbonitrides, the compound was subjected to characterisation by an appropriate characterisation technique. In the present embodiment the characterisation technique utilised was scanning electronic microscopy, showing that the intermetallic compound obtained is formed of substantially-spherical pulverised nanometric particles having a preferential diameter lying in a band from 300 to 500 nm.

### Example 2: Obtaining the finished lubricating oil containing the intermetallic compound of iron nitride and carbonitride herein produced.

Approximately 10% of the intermetallic compound obtained in accordance with the procedure described in Example 1 was added to a solution comprising a base oil, in different concentrations, and a mixture of dispersants, preferably polymeric such as, for example, ethylene vinyl acetate (EVA) and styrene-butadiene (SBR) to prevent precipitation or separation of the oil. The mixture of polymeric dispersants comprised approximately 20% (EVA) and 20% (SBR). The concentration of said intermetallic compound in the diverse formulations obtained ranged from zero to 0.5%.

Following addition of such intermetallic compound to said solution the mixture was subjected to homogenisation in a Turrax-type mixer at a preferential rotational speed of 15 000 rpm for a preferential period of 20 minutes.

On completion of the period of homogenisation of such mixtures diverse formulations of finished lubricating oil were obtained. Said formulations were initially analysed in respect of the frictional energy thereof and in accordance with such initial results one of said formulations was selected for realisation of the tribological test for the evaluation of the effect of addition of such new additive produced to a base lubricating oil.

Among such diverse formulations the formulation containing the intermetallic compound at a concentration of 0.1% by weight was that yielding the best result in terms of power loss, being consequently selected for realisation of the tribological test.

### Example 3: Tribological test on the finished lubricating oil.

Said tribological test consisted in the comparative analysis of diverse types of lubricating oil. Comparative analysis was carried out on a base oil, the formulation of finished lubricating oil obtained in accordance with the procedure described under Example 2, a commercial finished oil and a mixture of a commercial finished oil with the intermetallic compound obtained by means of the procedure described under Example 1.

Said mixture of commercial finished oil with the intermetallic compound herein disclosed was obtained in a manner similar to the obtainment of the mixture of base oil with the intermetallic compound. The dispersant substances and the intermetallic compound were added to the commercial finished oil, subsequently being homogenised in a manner analogous to the mixture of base oil with the said compound.

The different types of lubricating oils were subjected to conditions of wear by an appropriate technique such as, for example, the sliding technique. Such tribological test was realised in duplicate on all types of lubricating oil analysed.

The different types of oil were applied separately to equipment having four spheres realising a rotational movement in a band from 150 to 15 000 rpm, according to the phases carried out during the load cycle. The lubricating oils analysed were subjected to a single load cycle.

The load cycle applied during the tribological test consists of three phases which, combined with said rotational movement of the driving shaft, cause wear of said spheres and, consequently, evaluation of the performance of a lubricating oil under different forms of lubrication. The duration of the load cycle applied to the lubricating oils analysed is approximately 60 minutes and the temperature of the oil bath is controlled at a value of approximately 90°C.

The first phase of said cycle occurs during a period of approximately 30 minutes. Such first phase of said load cycle operates under a hydrodynamic lubrication regime having a preferential rotational movement of 1500 rpm and a torque of approximately 98 N.

The second phase of said load cycle occurs during a period of approximately 15 minutes. Such second phase of said load cycle operates under a mixed lubrication regime, that is to say the lubricant film may not permit contact between metal surfaces or sporadically permit contact between metal surfaces. Such second phase of said load cycle operates having a preferential rotational movement of 1500 rpm and a torque of approximately 1471 N.

The conditions of the third phase of said load cycle are similar to those of the first phase, however the sole difference between said two phases relates to the level of torque applied. In the third phase of the load cycle the torque applied is 147 N and the duration of such cycle is approximately 15 minutes.

During realisation of each load cycle electronic files are generated by the data acquisition system of the equipment to permit the monitoring of frictional torque and quantification of frictional energy to which such spheres were subjected. Said monitoring and quantification were accomplished by a spreadsheet produced in an operational program such as, for example, Excel. The graph generated for such monitoring and quantification is shown in Figure 2.

On completion of each load cycle the lower spheres, being worn arising from contact with the upper sphere, were evaluated.

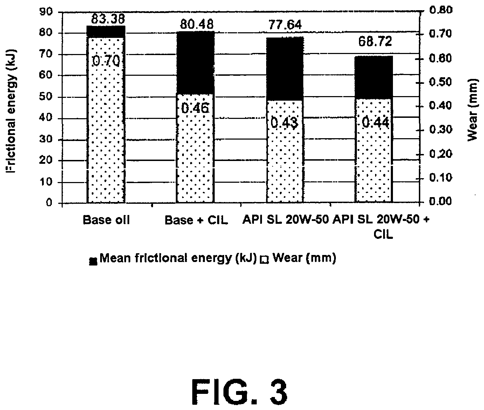

Evaluation of said spheres was carried out by observing the presence of the wear mark on the external surface of the spheres. Said marks are called wear scars. The wear scars of each sphere were measured utilising an optical microscope and the average of said measurements performed on the three spheres yielded the final result of the tribological test on the lubricating oils tested, as shown in Figure 3.

The invention herein described is not limited to this embodiment and those having ability in the art will perceive that any particular characteristic introduced therein shall solely be understood as something described to facilitate comprehension and cannot be realised without departing from the inventive concept described. The characteristics limiting the object of the present invention are listed in the claims forming part of this specification.

The invention also provides a process for obtaining an intermetallic compound for reduction of friction on metal surfaces characterised in that the final product is an additive formed of pulverised nanometric substantially-spherical particles of iron nitrides and carbonitrides, having hexagonal crystalline structure, for addition to a base lubricating oil to provide efficacious performance in reduction of friction between metal surfaces and reduction of wear of diverse types of equipment, prolonging the working life thereof.

The particles of additive preferably form an extremely active surface and are preferably stable at high temperatures and preferably form a thin adherent film when applied to a metal surface.

The process preferably consists of a reaction of reduction and of formulation of the product.

The process may occur at a temperature of approximately 800°C.

The process may be characterized by removal of oxygen by addition of ammonia and methane to the reactor optionally at a temperature of about 800°C.

## Claims

1. Process for obtaining an intermetallic compound for reduction of friction on metal surfaces comprising producing an additive comprising pulverised nanometric substantially-spherical particles of iron nitrides and carbonitrides, having hexagonal crystalline structure, for addition to a base lubricating oil, which process comprises a first stage consisting of a reduction reaction of iron oxide in the presence of hydrogen and a second stage consisting of a nitridation/carbonitridation reaction, wherein the particles obtained possess a diameter of up to 500 nm.

2. Process according to claim 1 **characterised in that** the reduction reaction occurs at temperatures from 300 - 800°C and in a rotating-chamber reactor for a period of up to 10 hours, preferentially in a period from 5 - 10 hours.

3. Process according to claim 2 **characterised in that** said reduction reaction occurs at a temperature of about 700°C over a period of about 7 hours.

4. Process according to any one of claims 1 to 3 **characterised in that** the second stage occurs by addition of ammonia and methane at a temperature from 300 - 800°C, for a period of up to 10 hours, preferentially in a period from 1 - 6 hours.

5. Process according to claim 4 **characterised in that** the second stage occurs at a temperature of 570°C over a period of realisation of 5 hours.

6. Process according to any preceding claim **characterised in that** the reaction system is cooled to a temperature of about 25°C and a flow of hydrogen gas is maintained substantially constant.

## Patentansprüche

1. Prozess zum Erhalten einer intermetallischen Verbindung zur Reduktion von Reibung auf Metalloberflächen, umfassend ein Produzieren eines Zusatzstoffs, der pulverisierte, nanometrische, im Wesentlichen sphärische Teilchen von Eisennitriden und Carbonitriden, die eine hexagonale kristalline Struktur aufweisen, umfasst, zur Zugabe eines Grundschmieröls, wobei der Prozess eine erste Stufe bestehend aus einer Reduktionsreaktion von Eisenoxid in der Anwesenheit von Wasserstoff und eine zweite Stufe bestehend aus einer Nitridierungs-/Carbonitridierungsreaktion umfasst, wobei die erhaltenen Teilchen einen Durchmesser von bis zu 500 nm besitzen.

2. Prozess nach Anspruch 1, **dadurch gekennzeichnet, dass** die Reduktionsreaktion bei Temperaturen von 300 - 800 °C und in einem Reaktor mit Rotationskammer für einen Zeitraum von bis zu 10 Stunden, bevorzugt in einem Zeitraum von 5 - 10 Stunden auftritt.

3. Prozess nach Anspruch 2, **dadurch gekennzeichnet, dass** die Reduktionsreaktion bei einer Temperatur von etwa 700 °C über einen Zeitraum von etwa 7 Stunden auftritt.

4. Prozess nach einem der Ansprüche 1 bis 3, **dadurch gekennzeichnet, dass** die zweite Stufe durch Zugabe von Ammoniak und Methan bei einer Temperatur von 300 - 800 °C für einen Zeitraum von bis zu 10 Stunden, bevorzugt in einem Zeitraum von 1 - 6 Stunden auftritt.

5. Prozess nach Anspruch 4, **dadurch gekennzeichnet, dass** die zweite Stufe bei einer Temperatur von 570 °C über einen Zeitraum der Durchführung von 5 Stunden auftritt.

6. Prozess nach einem der vorhergehenden Ansprüche, **dadurch gekennzeichnet, dass** das Reaktionssystem auf eine Temperatur von etwa 25 °C abgekühlt wird und ein Wasserstoffgasstrom im Wesentlichen konstant gehalten wird.

## Revendications

1. Procédé d'obtention d'un composé intermétallique destiné à la réduction de frottement sur des surfaces métalliques comprenant la production d'un additif comprenant des particules nanométriques pulvérisées sensiblement sphériques de nitrures et de carbonitrures de fer, présentant une structure cristalline hexagonale, en vue de l'ajout à une huile lubrifiante de base, lequel procédé comprend une première étape consistant en une réaction de réduction d'un oxyde de fer en présence d'hydrogène et une deuxième étape consistant en une réaction de nitruration / carbonitruration, les particules obtenues présentant un diamètre allant jusqu'à 500 nm.

2. Procédé selon la revendication 1 **caractérisé en ce que** la réaction de réduction se produit à des températures de 300 à 800 °C et dans une réacteur de chambre rotative pendant une période allant jusqu'à 10 heures, de préférence dans une période de 5 à 10 heures.

3. Procédé selon la revendication 2 **caractérisé en ce que** ladite réaction de réduction se produit à une température d'environ 700 °C sur une période d'environ 7 heures.

4. Procédé selon l'une quelconque des revendications 1 à 3 **caractérisé en ce que** la deuxième étape se produit par l'ajout d'ammoniac et de méthane à une température de 300 à 800 °C pendant une période allant jusqu'à 10 heures, de préférence dans une période de 1 à 6 heures.

5. Procédé selon la revendication 4 **caractérisé en ce que** la deuxième étape se produit à une température d'environ 570 °C sur une période de réalisation d'environ 5 heures.

6. Procédé selon l'une quelconque des revendications précédentes **caractérisé en ce que** le système de réaction est refroidi à une température d'environ 25 °C et un flux de gaz hydrogène est maintenu sensiblement constant.
